# EUROPEAN PATENT SPECIFICATION

(11) **EP 3 850 945 B1**
(45) Date of publication and mention of the grant of the patent: **16.11.2022**
(21) Application number: 21151790.9
(22) Date of filing: 15.01.2021
(51) Int. Cl.: A01K 61/60

(54) **SEMI-SUBMERSIBLE OFFSHORE AQUACULTURE PLATFORM BASED ON LIQUID CARGO SHIP MODIFICATION**
HALBTAUCHFÄHIGE OFFSHORE-AQUAKULTURPLATTFORM BASIEREND AUF DER MODIFIKATION EINES FLÜSSIGKEITSFRACHTSCHIFFS
PLATEFORME D'AQUACULTURE EN MER SEMI-SUBMERSIBLE BASÉE SUR UNE MODIFICATION DE NAVIRE DE TRANSPORT DE LIQUIDES

(30) Priority: 17.01.2020 CN 202020103954 U
(43) Date of publication of application: 21.07.2021
(73) Proprietor: Hainan Minde Ocean Development Co., Ltd, Haikou City, Hainan Province (CN)
(72) Inventor: SUN, Yanlai, Haikou, Hainan (CN); JIA, Guangxiang, Haikou, Hainan (CN); JIANG, Xianjing, Haikou, Hainan (CN); ZHOU, Haijun, Haikou, Hainan (CN); LIANG, Ping, Haikou, Hainan (CN); WANG, Daping, Haikou, Hainan (CN)
(74) Representative: Studio Torta S.p.A.

(56) References cited:
- EP-A1- 3 466 254
- WO-A1-2019/035719
- JP-A- H0 662 702
- US-B1- 6 402 965

## Description

### TECHNICAL FIELD

The present disclosure relates to a liquid cargo ship modified offshore aquaculture unit, and belongs to the technical field of offshore aquaculture facilities.

### BACKGROUND

Seaculture facilities comprise nearshore aquaculture facilities and offshore aquaculture facilities; offshore aquaculture is widely applied, but has the obvious defects that firstly, seriously pollution, red tide occurs frequently, and the mortality rate of aquacultured fish is high; secondly, large-scale damage is caused by severe sea conditions frequently, such as frequent typhoon and tropical storm. The offshore aquaculture technology of offshore facilities is widely applied in Norway at present, however, culturing high-value fishes such as salmons and yellow snail fishes due to too high manufacturing cost and operation cost of the aquaculture technology of offshore facilities. After long-time service of the liquid cargo ship, the transportation risk is increased year by year, such as oil spilling, which is most unwilling to be seen by ship owners. The retired liquid cargo ship can only be scrapped and disassembled, so that the secondary utilization rate is low; liquid such as crude oil is transported by the liquid cargo ship, and in order to avoid the transportation risk caused by sunlight irradiation, the liquid cargo ship transportation cabin is integrally of a light-proof closed structure; due to the fact that the requirement of seedlings in a seedling aquaculture cabin for water quality is high, a traditional offshore aquaculture work ship needs to be provided with complex seawater purification equipment to treat seawater so as to meet the use requirement of the seedling aquaculture cabin; and in addition, ballast tanks of the traditional offshore aquaculture work ship lack necessary protective measures, and attachment of a large number of marine organisms can be caused after long-term use.

For example, patent application No.EP3466254A1 discloses that an offshore aquaculture facility based on the modification of a bulk cargo ship is provided. It is achieved by converting a bulk cargo ship into a floating offshore facility at sea, with a number of cultivation tanks located below the deck, a movable hoisting system on the deck, a water-changing system in the cultivation tanks, and there are sealed void spaces between the shell plate of the offshore farming facility and the outer wall of the cultivation tank to provide buoyance for the facility. There are auxiliary cultivation compartments which are equipped with a water monitoring system, and equipment compartments on the deck. And a mooring device is installed in the bow of the facility.

### SUMMARY

In order to overcome the defects in the prior art, the present disclosure aims to provide a semi-submersible offshore aquaculture platform based on liquid cargo ship modification, so that the secondary utilization of retired liquid cargo ships is realized; and the problem that a liquid cargo ship is insufficient in lighting is solved, the cleanliness of inflow water of a seedling aquaculture cabin is guaranteed, and attachment of marine organisms in ballast tanks is reduced.

According to the invention, a semi-submersible offshore aquaculture platform based on liquid cargo ship modification comprises the features of independent claim 1. A plurality of aquaculture cabins are arranged at the bottom of main deck, i.e. the original cargo tanks are converted to aquaculture tank. By setting openings on side shell and centre longitudinal bulkhead, water exchange rate in aquaculture tank could be kept as fresh as fish lives. A plurality of light inlet holes communicating with the aquaculture cabins are formed in the deck, lighting devices are arranged on the deck, the lighting devices are connected to diffusers positioned in the aquaculture cabins through light guide tubes running through the deck, ballast tanks are further arranged at the bottom of the deck and are connected with a seawater main pipe through ballast water pipelines, and an ultrasonic vibration head is arranged on the seawater main pipe.

Preferably, the ultrasonic vibration head is connected with an ultrasonic generator, and the ultrasonic generator is fixed in an equipment room.

According to the invention, a seedling aquaculture cabin is further arranged below the deck, a filter cabin is arranged on the seedling aquaculture cabin, a water inlet pipe is arranged on the aquaculture cabin and connected with a filter device, and the water outlet end of the filter device communicates with the seedling aquaculture cabin.

The filter device comprises a water inlet cavity communicating with the water inlet pipe, water leakage holes are formed in the lower surface of the water inlet cavity, a filter belt is arranged at the outer bottom of the water inlet cavity, an obliquely arranged water receiving tank is formed below a top section of the filter belt, and the water receiving tank communicates with the seedling aquaculture cabin through a water outlet pipe.

Preferably, the filter belt circularly moves at the bottom of the water inlet cavity through rollers, a slag receiving box is arranged on the side portion of the filter belt 12, a slag removing head is arranged at an inlet in the top of the slag receiving box, the end of the slag removing head makes contact with the surface of the filter belt, an outlet in the bottom of the slag receiving box is positioned outside the filter cabin, a cleaning nozzle used for cleaning the filter belt is arranged in the filter cabin, a flow guide slope is arranged at the bottom of the filter cabin, and a water outlet is formed in the bottom end of the flow guide slope and positioned below the cleaning nozzle.

Preferably, the rollers comprise a roller a fixed in position and a roller b movable in position, the roller b is positioned at the end of a rotating arm, the rotating arm is connected with a rotating shaft, the rotating shaft is connected with a driving arm, and the driving arm is connected with the output end of a tensioning cylinder.

Preferably, limber holes are formed in middle longitudinal bulkheads of adjacent aquaculture cabins.

Preferably, the ballast tanks are positioned on the two sides or the bottoms of the aquaculture cabins.

The present invention has the beneficial effects that a liquid cargo ship with long-term service is modified into a cultivation work ship, so that the original liquid cargo ship is reutilized, a treatment scheme which is more economical than disassembly is obtained, liquid, such as crude oil, is transported when the liquid cargo ship is in service, and original crude oil storage units are modified into aquaculture cabins for containing seawater; compared with modification of other ship types (such as bulk cargo ships and container ships), the ship is simpler; the light inlet holes and the lighting devices are arranged on the deck, so that the lighting rate of the aquaculture cabins under the deck is improved; the ultrasonic vibration head is arranged on the seawater main pipe to destroy cells and tissue structures of marine organisms entering the pipe and prevent the marine organisms from being attached to the walls of the ballast tanks after entering the ballast tanks; and a filter device is arranged at a water inlet of the seedling aquaculture cabin to replace existing complex seawater purification equipment, and the quality of water entering the seedling aquaculture cabin is guaranteed.

### BRIEF DESCRIPTION OF THE DRAWINGS

There are all five accompanying diagrams in the present disclosure.
FIG. 1 is a top view of the present disclosure;
FIG. 2 is a partial side view I of the present disclosure;
FIG. 3 is a partial side view II of the present disclosure;
FIG. 4 is a partial side view III of the present disclosure; and
FIG. 5 is a partial enlarged drawing of the present disclosure.

Reference signs: 1, deck, 2; light inlet hole; 3, filter cabin; 4, lighting device; 5, light guide tube; 6, diffuser; 7, driving arm; 8, ultrasonic vibration head; 9, ultrasonic generator; 10, water inlet pipe; 11, water inlet cavity; 12, filter belt; 13, water receiving tank; 14, water outlet pipe; 15, rotating shaft; 16, slag receiving box; 17, slag removing head; 18, cleaning nozzle; 19, water outlet; 20, roller a; 21, roller b; 22, tensioning cylinder; 23, rotating arm; 24, middle longitudinal bulkhead; 25, limber hole; and 26, water exchanging hole.

### DETAILED DESCRIPTION

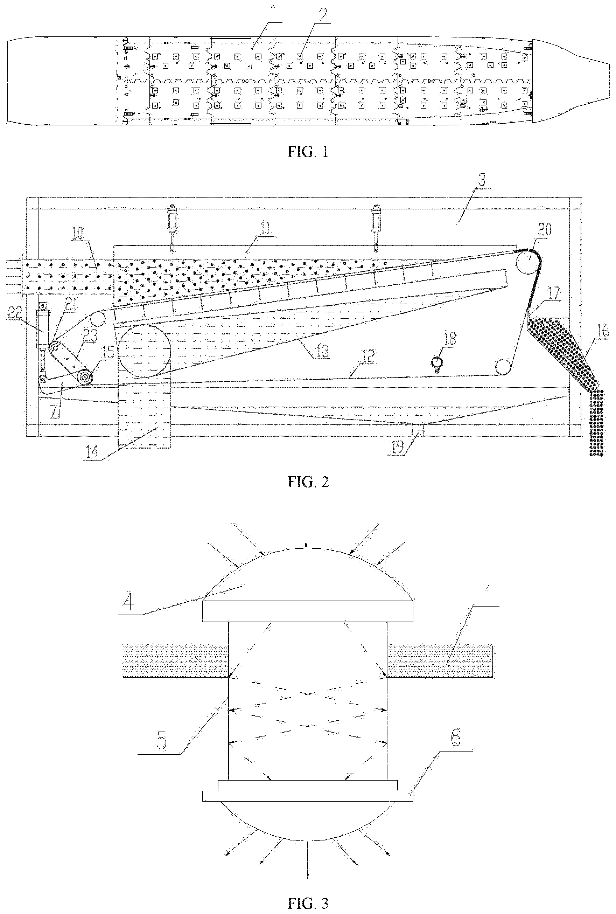

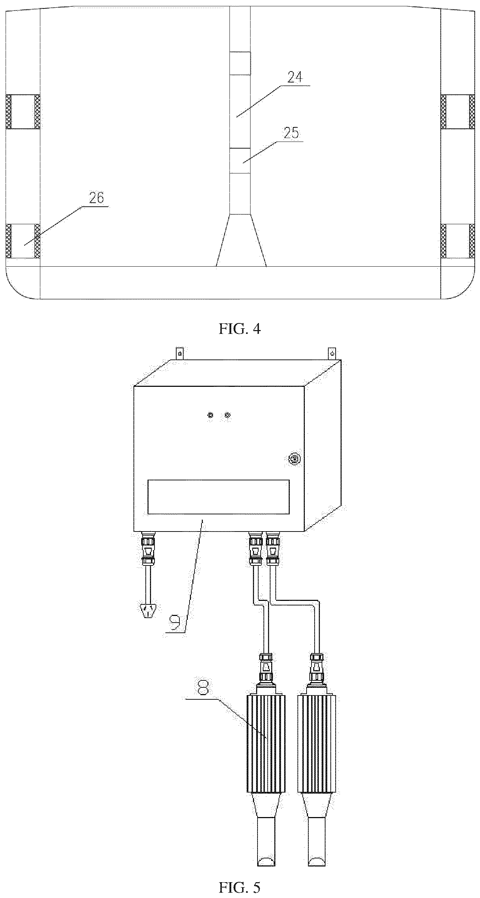

The present disclosure is further described in conjunction with the following accompanying diagrams FIG. 1 to FIG. 5:
According to a semi-submersible offshore aquaculture platform based on liquid cargo ship modification, a plurality of aquaculture cabins are arranged at the bottom of a deck 1, limber holes 25 are formed in middle longitudinal bulkheads 24 of adjacent aquaculture cabins, a plurality of light inlet holes 2 communicating with the aquaculture cabins are formed in the deck 1, water exchanging holes 26 communicating with the aquaculture cabins are formed in a ship board on the side part of the deck 1, lighting devices 4 are arranged on the deck 1, the lighting devices 4 are connected to diffusers 6 positioned in the aquaculture cabins through light guide tubes 5 running through the deck 1, ballast tanks are positioned on the two sides or at the bottoms of the aquaculture cabins and are connected with a seawater main pipe through ballast water pipelines, and an ultrasonic vibration head 8 is arranged on the seawater main pipe. The ultrasonic vibration head 8 is connected with an ultrasonic generator 9, and the ultrasonic generator 9 is fixed in an equipment room.

A seedling aquaculture cabin is further arranged below the deck 1, a filter cabin 3 is arranged on the seedling aquaculture cabin, a water inlet pipe 10 is arranged on the aquaculture cabin 3 and connected with a filter device, and the water outlet end of the filter device communicates with the seedling aquaculture cabin. The filter device comprises a water inlet cavity 11 communicating with the water inlet pipe 10, water leakage holes are formed in the lower surface of the water inlet cavity 11, a filter belt 12 is arranged at the outer bottom of the water inlet cavity 11, an obliquely arranged water receiving tank 13 is below a top section of the filter belt 12, and the water receiving tank 13 communicates with the seedling aquaculture cabin through a water outlet pipe 14. The filter belt 12 circularly moves at the bottom of the water inlet cavity 11 through rollers, a slag receiving box 16 is arranged on the side portion of the filter belt 12, a slag removing head 17 is arranged at an inlet in the top of the slag receiving box 16, the end of the slag removing head 17 makes contact with the surface of the filter belt 12, an outlet in the bottom of the slag receiving box 16 is positioned outside the filter cabin 3, a cleaning nozzle 18 used for cleaning the filter belt 12 is arranged in the filter cabin 3, a flow guide slope is arranged at the bottom of the filter cabin 3, and a water outlet 19 is formed in the bottom end of the flow guide slope and positioned below the cleaning nozzle 18. The rollers comprise a roller a 20 fixed in position and a roller b 21 movable in position, the roller b 21 is positioned at the end of a rotating arm 23, the rotating arm 23 is connected with a rotating shaft 15, the rotating shaft 15 is connected with a driving arm 7, and the driving arm 7 is connected with the output end of a tensioning cylinder 22.

A liquid cargo ship with long-term service is modified into a cultivation work ship, so that the original liquid cargo ship is reutilized, a treatment scheme which is more economical than disassembly is obtained, liquid, such as crude oil, is transported when the liquid cargo ship is in service, and original crude oil storage units are modified into aquaculture cabins for containing seawater; compared with modification of other ship types (such as bulk cargo ships and container ships), the ship is simpler; the light inlet holes 2 are arranged on the deck 1, so that light can pass through the light inlet holes 2 to enter the aquaculture cabins under the deck 1, the lighting device 4 is arranged at the position where light cannot be irradiated, the light enters the diffusers 6 through the light guide tubes 5 after being lighted by the lighting device 4, and then the diffusers 6 scatter the light to the position, where the light passing through the light inlet holes 2 cannot be irradiated, in the aquaculture cabins, and the lighting rate of the aquaculture cabins under the deck is improved; the ultrasonic vibration head 8 is arranged on the seawater main pipe to destroy cells and tissue structures of marine organisms entering the pipe and prevent the marine organisms from being attached to the walls of the ballast tanks after entering the ballast tanks under the action of the ultrasonic vibration head 8; and a filter device is arranged at a water inlet of the seedling aquaculture cabin to replace existing complex seawater purification equipment, and the quality of water entering the seedling aquaculture cabin is guaranteed.

Preferably, an LED fry seedling lamp can be further arranged in a fry cabin, the LED fry seedling lamp can be provided with a plurality of brightness gears, and the brightness of the LED fry seedling lamp is controlled through a remote controller.

The foregoing descriptions are merely example implementations of the present invention. It should be noted that a person of ordinary skill in the art may make several improvements or polishing without departing from the protection scope of the presentnvention defined by the appended claims.

## Claims

1. A semi-submersible offshore aquaculture platform based on liquid cargo ship modification, wherein a plurality of aquaculture cabins are arranged at the bottom of a deck (1), a plurality of light inlet holes (2) communicating with the aquaculture cabins are formed in the deck (1), water exchanging holes (26) communicating with the aquaculture cabins are formed in a ship board on the side part of the deck (1), ballast tanks are further arranged at the bottom of the deck (1) and are connected with a seawater main pipe through ballast water pipelines, **characterised in that** the semi-submersible offshore platform further comprises
an ultrasonic vibration head (8) arranged on the seawater main pipe;
lighting devices (4) arranged on the deck (1), wherein the lighting devices (4) are connected to diffusers (6) positioned in the aquaculture cabins through light guide tubes (5) running through the deck (1); and **in that** a seedling aquaculture cabin is further arranged below the deck (1), wherein a filter cabin (3) is arranged on the seedling aquaculture cabin, a water inlet pipe (10) is arranged on the filter cabin (3), the water inlet pipe (10) is connected with a filter device, and the water outlet end of the filter device communicates with the seedling aquaculture cabin;
the filter device comprising a water inlet cavity (11) communicating with the water inlet pipe (10), wherein
water leakage holes are formed in the lower surface of the water inlet cavity (11), a filter belt (12) is arranged at the outer bottom of the water inlet cavity (11), an obliquely arranged water receiving tank (13) is formed below a top section of the filter belt (12), and the water receiving tank (13) communicates with the seedling aquaculture cabin through a water outlet pipe (14).

2. The semi-submersible offshore aquaculture platform based on liquid cargo ship modification according to claim 1, wherein the ultrasonic vibration head (8) is connected with an ultrasonic generator (9), and the ultrasonic generator (9) is fixed in an equipment room.

3. The semi-submersible offshore aquaculture platform based on liquid cargo ship modification according to claim 1, wherein the filter belt (12) circularly moves at the bottom of the water inlet cavity (11) through rollers, a slag receiving box (16) is arranged on the side portion of the filter belt (12), a slag removing head (17) is arranged at an inlet in the top of the slag receiving box (16), the end of the slag removing head (17) makes contact with the surface of the filter belt (12), an outlet in the bottom of the slag receiving box (16) is positioned outside the filter cabin (3), a cleaning nozzle (18) used for cleaning the filter belt (12) is arranged in the filter cabin (3), a flow guide slope is arranged at the bottom of the filter cabin (3), and a water outlet (19) is formed in the bottom end of the flow guide slope and positioned below the cleaning nozzle (18).

4. The semi-submersible offshore aquaculture platform based on liquid cargo ship modification according to claim 3, wherein the rollers comprise a roller a (20) fixed in position and a roller b (21) movable in position, the roller b (21) is positioned at the end of a rotating arm (23), the rotating arm (23) is connected with a rotating shaft (15), the rotating shaft (15) is connected with a driving arm (7), and the driving arm (7) is connected with the output end of a tensioning cylinder (22).

5. The semi-submersible offshore aquaculture platform based on liquid cargo ship according to claim 1, wherein limber holes (25) are formed in middle longitudinal bulkheads (24) of adjacent aquaculture cabins.

6. The semi-submersible offshore aquaculture platform based on liquid cargo ship according to claim 1, wherein the ballast tanks are positioned on the two sides or the bottoms of the aquaculture cabins.

## Patentansprüche

1. Halbtauchfähige Offshore-Aquakulturplattform, basierend auf der Modifikation eines Flüssigkeitsfrachtschiffs,
wobei eine Vielzahl von Aquakulturkabinen am Boden eines Decks (1) angeordnet ist, eine Vielzahl von Lichteinlassöffnungen (2), die mit den Aquakulturkabinen kommunizieren, in dem Deck (1) gebildet ist, Wasseraustauschöffnungen (26), die mit den Aquakulturkabinen kommunizieren, in einer Bordwand an dem Seitenteil des Decks (1) gebildet sind, weiter Ballasttanks am Boden des Decks (1) angeordnet sind und mit einem Meereswasserhauptrohr über Ballastwasserrohre verbunden sind,
**dadurch gekennzeichnet, dass** die halbtauchfähige Offshore-Plattform weiter Folgendes umfasst:
einen Ultraschall-Vibrationskopf (8), der an dem Meereswasserhauptrohr angeordnet ist;
Beleuchtungsvorrichtungen (4), die an dem Deck (1) angeordnet sind, wobei die Beleuchtungsvorrichtungen (4) über Lichtleiterröhren (5), die durch das Deck (1) verlaufen, mit Diffusoren (6) verbunden sind, die in den Aquakulturkabinen positioniert sind; und dadurch, dass
weiter eine Sämling-Aquakulturkabine unter dem Deck (1) angeordnet ist, wobei
eine Filterkabine (3) an der Sämling-Aquakulturkabine angeordnet ist, ein Wassereinlassrohr (10) an der Filterkabine (3) angeordnet ist, wobei das Wassereinlassrohr (10) mit einer Filtervorrichtung verbunden ist, und das Wasserauslassende der Filtervorrichtung mit der Sämling-Aquakulturkabine kommuniziert;
wobei die Filtervorrichtung Folgendes umfasst:
einen Wassereinlasshohlraum (11), der mit dem Wassereinlassrohr (10) kommuniziert, wobei
Wasserleckageöffnungen in der unteren Oberfläche des Wassereinlasshohlraums (11) gebildet sind, ein Filterband (12) an dem Außenboden des Wassereinlasshohlraums (11) angeordnet ist, ein schräg angeordneter Wasseraufnahmetank (13) unter einem Oberteil des Filterbands (12) gebildet ist und der Wasseraufnahmetank (13) über ein Wasserauslassrohr (14) mit der Sämling-Aquakulturkabine kommuniziert.

2. Halbtauchfähige Offshore-Aquakulturplattform basierend auf der Modifikation eines Flüssigkeitsfrachtschiffs nach Anspruch 1, wobei der Ultraschall-Vibrationskopf (8) mit einem Ultraschallgenerator (9) verbunden ist, und der Ultraschallgenerator (9) in einem Geräteraum befestigt ist.

3. Halbtauchfähige Offshore-Aquakulturplattform basierend auf der Modifikation eines Flüssigkeitsfrachtschiffs nach Anspruch 1, wobei sich das Filterband (12) am Boden des Wassereinlasshohlraums (11) über Rollen kreisförmig bewegt, ein Schlackeaufnahmekasten (16) an dem Seitenabschnitt des Filterbands (12) angeordnet ist, ein Schlackeentfernungskopf (17) an einem Einlass im Oberteil des Schlackeaufnahmekastens (16) angeordnet ist, das Ende des Schlackeentfernungskopfs (17) mit der Oberfläche des Filterbands (12) in Berührung steht, ein Auslass am Boden des Schlackeaufnahmekastens (16) außerhalb der Filterkabine (3) positioniert ist, eine Reinigungsdüse (18), die zum Reinigen des Filterbands (12) verwendet wird, in der Filterkabine (3) angeordnet ist, eine Flussführungsneigung am Boden der Filterkabine (3) angeordnet ist, und ein Wasserauslass (19) im unteren Ende der Flussführungsneigung gebildet ist und unter der Reinigungsdüse (18) positioniert ist.

4. Halbtauchfähige Offshore-Aquakulturplattform basierend auf der Modifikation eines Flüssigkeitsfrachtschiffs nach Anspruch 3, wobei die Rollen eine Rolle a (20), deren Position fix ist, und eine Rolle b (21), deren Position beweglich ist, umfassen, wobei die Rolle b (21) am Ende eines Rotationsarms (23) positioniert ist, wobei der Rotationsarm (23) mit einer Rotationswelle (15) verbunden ist, wobei die Rotationswelle (15) mit einem Antriebsarm (7) verbunden ist, und der Antriebsarm (7) mit dem Abtriebsende eines Spannzylinders (22) verbunden ist.

5. Halbtauchfähige Offshore-Aquakulturplattform basierend auf Flüssigkeitsfrachtschiff nach Anspruch 1, wobei Speigatten (25) in mittleren Längsschotts (24) von angrenzenden Aquakulturkabinen gebildet sind.

6. Halbtauchfähige Offshore-Aquakulturplattform basierend auf Flüssigkeitsfrachtschiff nach Anspruch 1, wobei die Ballasttanks an den zwei Seiten oder den Böden der Aquakulturkabinen positioniert sind.

## Revendications

1. Plate-forme d'aquaculture en mer semi-submersible basée sur une modification de navire à cargaison liquide dans laquelle une pluralité de cabines d'aquaculture sont agencées au fond d'un pont (1), une pluralité de trous d'entrée de lumière (2) communiquant avec les cabines d'aquaculture sont formés dans le pont (1), des trous d'échange d'eau (26) communiquant avec les cabines d'aquaculture sont formés dans un bord de navire sur la partie latérale du pont (1), des citernes de ballast sont en outre agencées au fond du pont (1) et sont reliées à un tuyau principal sous-marin au moyen de conduites d'eau de ballast, **caractérisée en ce que** la plate-forme en mer semi-submersible comprend en outre
une tête de vibration ultrasonore (8) agencée sur le tuyau principal sous-marin ;
des dispositifs d'éclairage (4) agencés sur le pont (1), dans laquelle les dispositifs d'éclairage (4) sont reliés à des diffuseurs (6) positionnés dans les cabines d'aquaculture au moyen de tubes de guidage de lumière (5) s'étendant à travers le pont (1) ; et **en ce que** une cabine d'aquaculture de semis est en outre agencée en dessous du pont (1),dans laquelle une cabine de filtre (3) est agencée sur la cabine d'aquaculture de semis, un tuyau d'entrée d'eau (10) est agencé sur la cabine de filtre (3), le tuyau d'entrée d'eau (10) est relié à un dispositif filtrant et l'extrémité de sortie d'eau du dispositif filtrant communique avec la cabine d'aquaculture de semis ;
le dispositif filtrant comprenant
une cavité d'entrée d'eau (11) communiquant avec le tuyau d'entrée d'eau (10),
dans laquelle
des trous de fuite d'eau sont formés dans la surface inférieure de la cavité d'entrée d'eau (11), une bande filtrante (12) est agencée au fond externe de la cavité d'entrée d'eau (11), un réservoir de réception d'eau agencé obliquement (13) est formé en dessous d'une section supérieure de la bande filtrante (12) et le réservoir de réception d'eau (13) communique avec la cabine d'aquaculture de semis au moyen d'un tuyau de sortie d'eau (14).

2. Plate-forme d'aquaculture en mer semi-submersible basée sur une modification de navire à cargaison liquide selon la revendication 1, dans laquelle la tête de vibration ultrasonore (8) est reliée à un générateur d'ultrasons (9) et le générateur d'ultrasons (9) est fixé dans un local technique.

3. Plate-forme d'aquaculture en mer semi-submersible basée sur une modification de navire à cargaison liquide selon la revendication 1, dans laquelle la bande filtrante (12) se déplace de manière circulaire au fond de la cavité d'entrée d'eau (11) au moyen de rouleaux, une boîte de réception des crasses (16) est agencée sur la partie latérale de la bande filtrante (12), une tête d'élimination des crasses (17) est agencée au niveau d'une entrée dans la partie supérieure de la boîte de réception des crasses (16), l'extrémité de la tête d'élimination des crasses (17) fait contact avec la surface de la bande filtrante (12), une sortie au fond de la boîte de réception des crasses (16) est positionnée à l'extérieur de la cabine de filtre (3), une buse de nettoyage (18) utilisée pour nettoyer la bande filtrante (12) est agencée dans la cabine de filtre (3), une pente de guidage d'écoulement est agencée au fond de la cabine de filtre (3) et une sortie d'eau (19) est formée dans l'extrémité inférieure de la pente de guidage d'écoulement et positionnée en dessous de la buse de nettoyage (18).

4. Plate-forme d'aquaculture en mer semi-submersible basée sur une modification de navire à cargaison liquide selon la revendication 3, dans laquelle les rouleaux comprennent un rouleau a (20) fixé en position et un rouleau b (21) pouvant se déplacer en position, le rouleau b (21) est positionné au niveau de l'extrémité d'un bras rotatif (23), le bras rotatif (23) est relié à un arbre rotatif (15), l'arbre rotatif (15) est relié à un bras d'entraînement (7) et le bras d'entraînement (7) est relié à l'extrémité de sortie d'un cylindre tendeur (22).

5. Plate-forme d'aquaculture en mer semi-submersible basée sur une modification de navire à cargaison liquide selon la revendication 1, dans laquelle des anguillers (25) sont formés dans des cloisons longitudinales intermédiaires (24) de cabines d'aquaculture adjacentes.

6. Plate-forme d'aquaculture en mer semi-submersible basée sur une modification de navire à cargaison liquide selon la revendication 1, dans laquelle les citernes de ballast sont positionnées sur les deux côtés ou les fonds des cabines d'aquaculture.
